# EUROPEAN PATENT SPECIFICATION

(11) **EP 1 862 354 B1**
(45) Date of publication and mention of the grant of the patent: **21.04.2010**
(21) Application number: 07010148.0
(22) Date of filing: 22.05.2007
(51) Int. Cl.: B60R 1/00, B60Q 1/00, B60Q 1/30

(54) **Driving assist method and driving assist apparatus**
Fahrhilfeverfahren und Fahrhilfevorrichtung
Procédé d'assistance à la conduite et appareil d'assistance à la conduite

(30) Priority: 31.05.2006 JP 2006151345
(43) Date of publication of application: 05.12.2007
(73) Proprietor: AISIN AW CO., LTD., Anjo-shi, Aichi 444-1192 (JP)
(72) Inventor: Kano, Toshihiro, Okazaki-shi Aichi 444-8564 (JP); Nakajima, Akihiro, Okazaki-shi Aichi 444-8564 (JP)
(74) Representative: Kramer - Barske - Schmidtchen

(56) References cited:
- WO-A-00/15462

## Description

The present invention relates to a driving assist method and a driving assist apparatus.

There has been known heretofore a vehicle-mounted apparatus that displays images taken by an on-board camera on the apparatus's display. This apparatus receives picture signals from the on-board camera mounted at the rear end of the vehicle, and outputs, to the display arranged near the driver's seat along with guide lines, background images based on the picture signals.

In addition, in Japanese Patent Application Publication No. JP-A-2002-373327, there is proposed an image processing apparatus that, along with storing image data input from an on-board camera, performs image processing using the stored image data and displays a panoramic view image overlooking the range around the vehicle.

However, when the vehicle is moving backward, the road surface or obstacles around the vehicle can be illuminated red by lighting of tail lamps or brake lamps. For example, because brake lamps are lighted intermittently, the image data captured when the brake lamps are lighted and the image data captured when they are not lighted become the data with different hues and brightness levels even if the same road surface or the continuous road surface is taken. In this way, if image processing is performed in the aforementioned way using the image data taken under different illumination conditions and the resultant composite data is output to the display, there are displayed a composite image in which the road surface around the vehicle is totally or partially red, or a spotty composite image which has partly different brightness. Therefore, not only is it impossible to display images of good quality, but also there is a possibility of causing the driver's misunderstanding such as confusion with road markings.

WO 00/15462 relates to a method and apparatus according to the preambles of claims 1 and 2.

In view of the above-mentioned problems, the present invention aims to provide a driving assist method and a driving assist apparatus that can display driving assist images of good quality.

This is achived by the method of claim 1 and the apparatus of claim 2. Further developments are given in the dependent claims.

The image data taken when the illuminator of the vehicle lighting device is non-luminous is used as the driving assist image. In the driving assist image, the poor quality of images such as partial reddening by illumination of the illuminator is prevented. Therefore, the driving assist image of good quality can be displayed.

Preferably, when the vehicle lighting device is in a non-lighting state, image taking is performed by controlling the image-taking device at a constant interval or every predetermined travel distance of the vehicle. For this reason, the image-taking device can be controlled depending on the state of the vehicle lighting device.

Because the image-taking controller preferably acquires, from the image-taking device mounted at the rear end of the vehicle, the image data taken when the illuminator is non-luminous, the driving assist image of good quality showing the vehicle's rear view can be displayed during the vehicle reverse motion.

Preferably, the driving assist apparatus allows image recognition by using a plurality of image data taken under different illumination conditions by the vehicle lighting device mounted at different locations on the vehicle. For this reason, because the objects around the vehicle are illuminated under different conditions, the shapes of the objects can be recognized visually in more details.
FIG 1 is a block diagram of a driving assist apparatus of one embodiment of the present invention;
FIG. 2 is an explanatory drawing of locations of tail lamps and brake lamps;
FIG. 3 is an explanatory drawing of location of a rear camera;
FIG. 4 is an explanatory diagram of processing procedure of this embodiment;
FIG. 5 is an explanatory diagram of processing procedure of this embodiment;
FIG 6A is a time chart showing an on/off signal, and FIG. 6B is a time chart showing an image pickup timing signal;
FIG. 7 is an explanatory illustration of a driving assist image; and
FIG. 8 is an explanatory illustration of a vehicle in another example.

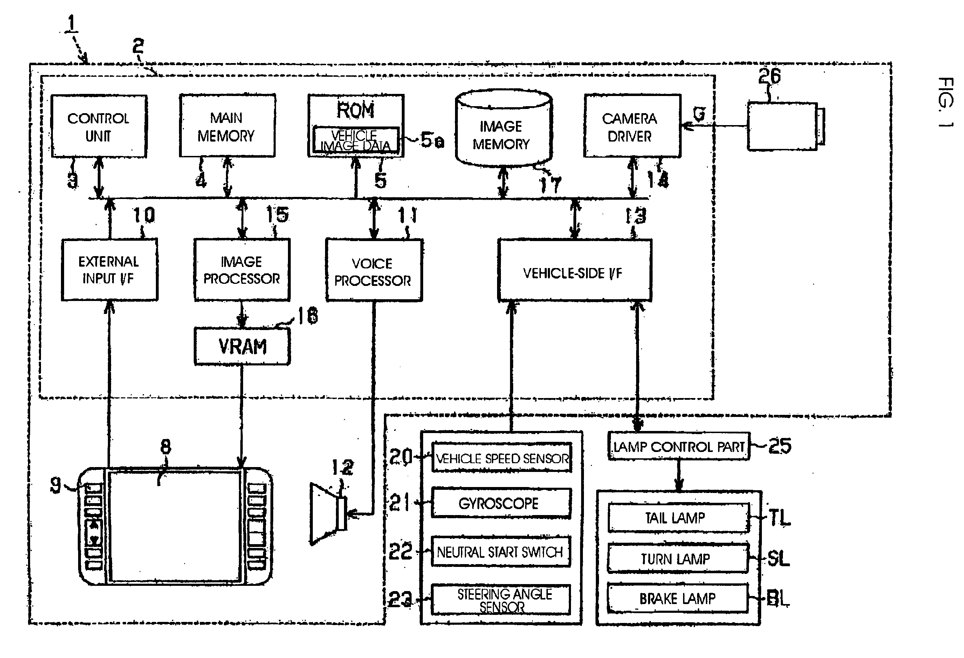

One embodiment of the present invention concerning a driving assist apparatus is described below referring to FIG. 1 to FIG. 7. FIG. 1 is a block diagram of a driving assist apparatus of one embodiment of the present invention.

As shown in FIG. 1, a driving assist system 1 is provided with a control unit 2 as a driving assist apparatus. The control unit 2 has a control part 3 as a lighting device controller and an image taking controller, a main memory 4, and a ROM 5. The control part 3 performs main control of various processing according to various programs including a driving assist program stored in the ROM 5. The main memory 4 stores various variables, flags, and so forth for driving assist purposes, as well as temporarily storing calculation results of the control part 3.

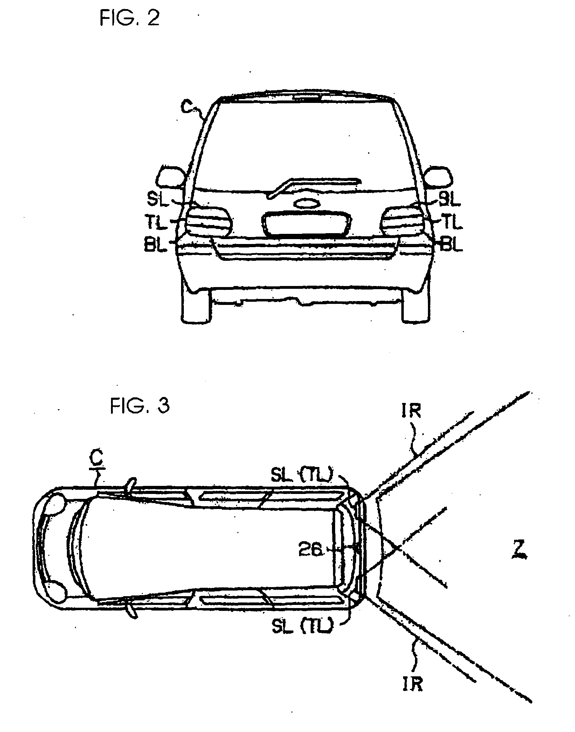

In the ROM 5, vehicle image data 5a is stored as well as various programs. The vehicle image data 5a is the data to be output to a display 8 as a displaying device the image of a vehicle (see FIG. 2) in which the driving assist system 1 is implemented.

The display 8 is a touch panel, and when input operation is executed on this touch panel, a signal depending on the input operation is output to the control part 3 via an external input interface (hereinafter called "external input I/F 10") provided in the control unit 2. In addition, when an operating switch 9 provided adjacent to the display 8 receives an input operation of a user, a signal depending on the input operation is output to the control part 3 similarly via the external input I/F 10.

The control unit 2 is provided also with a voice processor 11. The voice processor 11 is provided with a memory, which is not shown, storing voice files, digital-analog converter, and so forth, and, by using the voice files, outputs guidance voices and warning sounds from a speaker 12 provided in the driving assist system 1.

Furthermore, the control unit 2 is provided with a vehicle-side interface (hereinafter called "vehicle-side I/F 13"). The control part 3, via this vehicle-side I/F 13, receives vehicle speed pulses from a vehicle speed sensor 20 installed in a vehicle C, and counts the number of pulses. In addition, the control part 3 receives a direction detection signal from a gyroscope 21 via the vehicle-side I/F 13, and updates the current direction, which is a variable stored in the main memory 4.

In addition, the control part 3 receives a shift position signal from a neutral start switch 22 of the vehicle C via the vehicle-side I/F 13, and updates the shift position, which is a variable stored in the main memory 4. Furthermore, the control part 3 receives a steering sensor signal from a steering angle sensor 23 via the vehicle-side I/F 13.

The control part 3, when the shift position signal that indicates reverse is input, sets the position of the vehicle at that moment as the reference position at which the vehicle reverse motion has started. Based on the reference position, the vehicle speed pulse, and the steering sensor signal, it calculates a relative coordinate from the reference position and a relative steering angle.

In addition, the control part 3 is connected to a lamp control part 25 of the vehicle C via the vehicle-side I/F 13. The lamp control part 25 turns on and off vehicle lighting devices of the vehicle C shown in FIG 3, tail lamps TL, and brake lamps BL, and also flashes turn lamps SL as direction indicator lamps. The tail lamps TL are turned on at night and so forth, and emit red light when turned on. The brake lamps BL are turned on when a brake pedal is pressed, and also emit red light. The turn lamp SL is flashed at predetermined intervals by the driver's lever operation when making a turn.

The tail lamps TL and the brake lamps BL have light-emitting diodes as illuminators. The lamp control part 25 generates an on/off signal when turning on the tail lamps TL and brake lamps BL, and, based on the on/off signal, makes the light-emitting diodes of the tail lamps TL and the brake lamps BL repeat lighting and non lighting at a predetermined frequency (for example, at more than 60 Hz or in a constant period less than 16 milliseconds) at which human eyes cannot recognize visually. For this reason, the tail lamps TL and the brake lamps BL appear to be lighted to pedestrians and drivers of other vehicles.

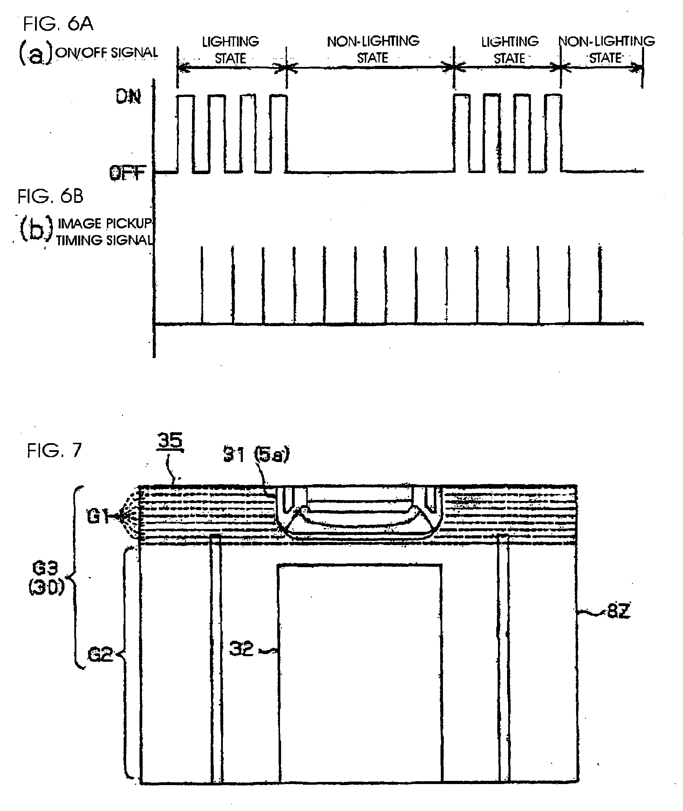

For example, the lamp control part 25, when it has received a brake signal from a brake sensor which is not shown, generates an on/off signal shown in FIG. 6A, and, based on the on/off signal, repeats lighting and non lighting of the light-emitting diodes of the brake lamps BL at a high frequency. Because the frequency in this case is beyond the range wherein human eyes can see, the brake lamps BL appear to be lighted to pedestrians and drivers of other vehicles. When the brake signal is not input from the brake sensor, the light-emitting diodes of the brake lamps BL become continuously non-luminous, and the brake lamps BL become non-lighting state. Similarly, when making the tail lamps TL light up, the lamp control part 25 continuously outputs the on/off signal to the tail lamps TL.

In addition, the lamp control part 25 outputs an image pickup timing signal to a camera driver 14 via the vehicle-side 1/F 13. Specifically, the lamp control part 25 outputs the image pickup timing signal shown in FIG. 6B to the control part 3 at the timing when the on/off signal is off while repeating the luminous and non- luminous periods of the light-emitting diodes of the tail lamps TL and the brake lamps BL.

In addition, the lamp control part 25, when the tail lamps TL and the brake lamps BL are not lighting, outputs an image pickup timing signal that has the same period as the image pickup timing signal of FIG. 6B and that does not depend on the phase of the on/off signal.

In addition, the camera driver 14 as an image taking controller, in response to the image pickup timing signal input, controls to drive a rear camera 26 as an image-taking device mounted at the rear end of the vehicle C as shown in FIG 3. The rear camera 26 is provided with an optical mechanism composed of a wide-angle lens, mirror and so forth, and with a CCD image sensor, none of which are shown, and is mounted at a location such as on the back door with its optical axis obliquely downward. The camera driver 14, in response to the image pickup timing signal, generates a driving signal to drive the CCD image sensor and a driving signal to drive an electronic shutter, and outputs those signals to the rear camera 26.

In other words, as shown in FIG. 3, this rear camera 26 sets the range within several meters back from the vehicle C as an image-taking range Z, and this image-taking range Z overlaps the irradiation range IR of the tail lamps TL. Therefore, when the rear camera 26 is driven while the tail lamps TL and brake lamps BL are in the lighting state, a picture is taken of the road surface and obstacles illuminated red by the tail lamps TL and the brake lamps BL. For this reason, while the tail lamps TL and brake lamps BL are in the lighting state, the camera driver 14 takes a picture by controlling to drive the electronic shutter of the rear camera 26 when the light-emitting diodes are in the non-luminous period of the luminous and non-luminous periods. The rear camera 26 also performs various processing such as analog-digital conversion with respect to the CCD output signal from the CCD image sensor, and outputs digitized image data G to the camera driver 14.

An image processor 15 as an output controller receives the image data G from the camera driver 14, and through applying coordinate conversion to the image data G, generates panoramic view data G1 overlooking the image-taking range Z from directly overhead. Furthermore, associating with the then position relative to the reference position and the steering angle, it stores the panoramic view data G1 in an image memory 17 as an image data storage.

The image processor 15, when a predetermined number of sheets of the panoramic view data G1 have been accumulated in the image memory 17, by connecting continuously a part of each the panoramic view data G1 and the most recent image data G (hereinafter called "current image data G2"), forms composite data G3 and stores it in a VRAM 16. Then it outputs the composite data G3 as well as reference marks such as vehicle image data 5a to the display 8.

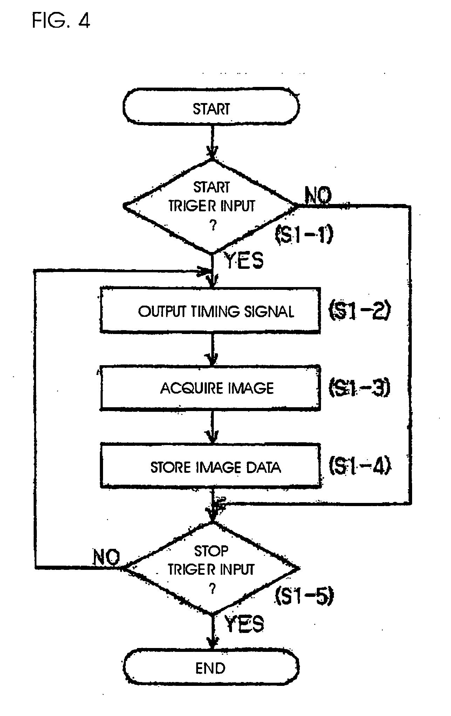

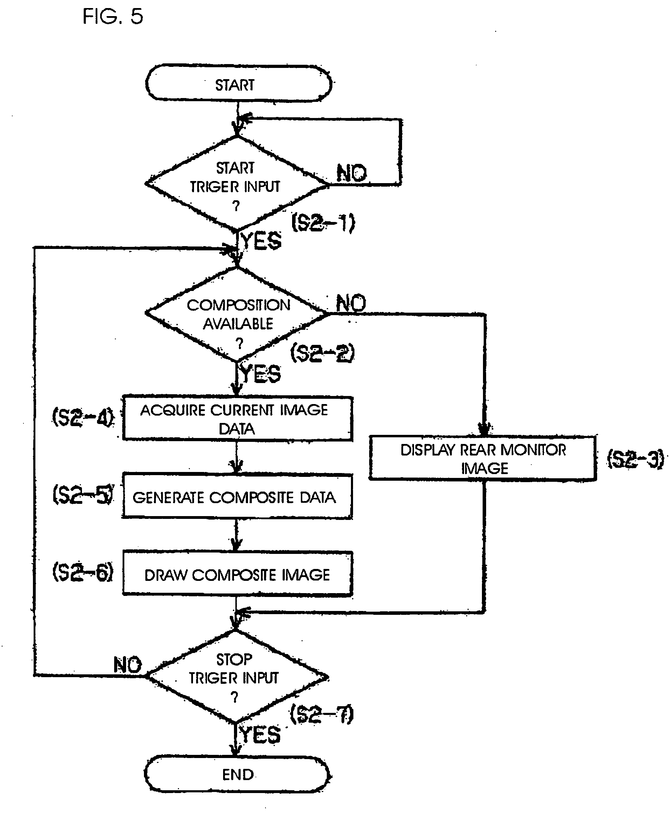

Next, the processing procedure of this embodiment is described referring to FIG. 4 and FIG. 5. In the image data accumulation processing shown in FIG. 4, the control part 3 waits for the input of a start trigger for driving assist processing (step S1-1). The start trigger is, in this embodiment, a signal indicating the reverse position from the neutral start switch 22, and, when this start trigger is input (YES in step S1-1), the then position of the vehicle C is set as a reference position as described above. In addition, the lamp control part 25 outputs the image pickup timing signal to synchronize the rear camera 26 with the tail lamps TL and the brake lamps BL (step S1-2).

The camera driver 14 performs image acquisition processing based on this image pickup timing signal (step S1-3). In other words, as shown in FIG. 6, the camera driver 14, in case that the tail lamps TL and brake lamps BL are in the lighting state, performs image taking when the light-emitting diodes are in the non-luminous period of the luminous and non-luminous periods, and acquires the image data G from the rear camera 26.

The camera driver 14, when it receives the image data G, outputs it to the image processor 15. The image processor 15, performing a known coordinate conversion, generates the panoramic view data G1 overlooking from overhead the image-taking range Z of the rear camera 26. Based on the control part 3, the processor stores in the image memory 17 the panoramic view data G1, associating it with the position relative to the reference position and the then steering angle (step S1-4).

Then the control part 3 judges whether or not a stop trigger is input (step S1-5). In this embodiment, the stop trigger is an input of a shift position signal except the reverse position. If the stop trigger is not input (NO in step S1-5), the process returns to step S1-2 and the processing described above is repeated.

Next, image composition processing is described referring to FIG. 5. This image composition processing is performed in parallel with the image data accumulation processing shown in FIG. 4. The control part 3 waits for the input of a start trigger (step S2-1) similarly to the image data accumulation processing. When judging that the start trigger is input (YES in step S2-1), the image processor 15 judges whether or not a composite image can be formed (step S2-2). At this time, the image processor 15 acquires the current position (relative coordinate from the reference position) of the vehicle C, and judges whether or not sufficient sheets of the panoramic view data G1 corresponding to the current area around the rear of the vehicle C are stored.

If sufficient sheets of the panoramic view data G1 are not stored, judging that a composite image cannot be formed (NO in step S2-2), the image processor 15 displays a rear monitor image (figure omitted) on the display 8 (step S2-3). Specifically, the image processor 15 outputs an image acquisition signal to the camera driver 14. The camera driver 14, when it receives the image acquisition signal, based on the image pickup timing signal that is output from the lamp control part 25 and independent of the phase of the on/off signal, performs image taking by driving the rear camera 26. The camera driver 14 outputs the image data G acquired from the rear camera 26 to the image processor 15, and the image processor 15, after temporarily storing the image data G in the VRAM 16, displays on the display 8 the rear monitor image based on the image data G and guide lines such as a vehicle width extension line and a predicted path locus based on the steering angle. Therefore, the rear monitor image becomes an image around the vehicle illuminated by the tail lamps TL and the brake lamps BL, and thus becomes almost the same background as the background that the driver actually recognizes visually. For this reason, if the composite image using the panoramic view data G1 is not displayed during reverse motion of the vehicle C, a flicker-free image that does not give the driver a strange feeling can be displayed.

On the other hand, when judging that a composite image can be formed (YES in step S2-2), the image processor 15 acquires current image data G2 form the camera driver 14 (step S2-4). At this time, the camera driver 14, when the light-emitting diodes of the tail lamps TL and the brake lamps BL are non-luminous, performs image taking by controlling to drive the rear camera 26.

Having acquired the current image data G2, the image processor 15 forms the composite data G3 (step S2-5). Specifically, it extracts a part of each the panoramic view data G1, stored in the image memory 17, corresponding to the current area around the rear of the vehicle C. In addition, as shown in FIG 7, the processor merges the extracted data along the direction almost parallel to the reverse motion of the vehicle C so that the images become continuous, and arranges the image merged from the extracted data so that it is displayed in the upper part of a display area 8Z of the display 8. In addition, it applies a panoramic conversion to the current image data G2, and arranges it continuously with the extracted data based on each the panoramic view data G1 so that composite data based on the current image data G2 is displayed in the lower part of the display area 8Z. Then the processor temporarily stores in the VRAM 16 the composite data G3 consisting of each the panoramic view data G1 and the current image data G2.

Having formed the composite data G3, the image processor 15 draws the composite image on the display 8 (step S2-6). At this time, the image processor 15, as shown in FIG. 7, superimposes a vehicle image 31 based on the vehicle image data 5a in a predetermined position above a composite image 30 as a driving assist image based on the composite data G3. Furthermore, it draws a guide line 32 such as a vehicle width extension line of the vehicle C. As a result, an auxiliary image 35 as shown in FIG. 7 is displayed on the display 8. At this time, the image based on the continuously displayed panoramic view data G1 corresponds to the current area around the rear of the vehicle C. In addition, because the image data G taken when the light-emitting diodes of the tail lamps TL and the brake lamps BL are non-luminous is used, the illumination condition becomes constant, and the poor quality of image such as partial reddening does not occur, resulting in a good image quality. The vehicle driver visually recognizes this auxiliary image 35 and recognizes the relative position between a target parking area and the vehicle C. The driving assist system 1 repeats the processing described above until the parking is completed.

When the parking is completed and a shift position signal except the reverse position is input from the neutral start switch 22, the control part 3 judges that a stop trigger is input (YES in step S1-5 and step S2-7), and terminates the processing.

According to the above embodiment, the following effects can be obtained.
(1) In the above embodiment, the camera driver 14, based on the image pickup timing signal output by the lamp control part 25, takes an image of the rear of the vehicle C by controlling to drive the rear camera 26 when the light-emitting diodes of the tail lamps TL and the brake lamps BL are non-luminous. In addition, the generated image data G is stored as the panoramic view data G1 in the image memory 17, and the panoramic view data G1 is used in the composite image 30. Furthermore, the current image data G2 used in the composite image 30 is also taken when the light-emitting diodes are non-luminous, based on the image pickup timing signal. Consequently, the composite image 30 does not become an image that is partly red or uneven in brightness due to illumination of the tail lamps TL and the brake lamps BL. Moreover, because the whole road surface around the vehicle does not become a red image, the image quality can become good.
(2) In the above embodiment, the lamp control part 25 makes the light-emitting diodes of the tail lamps TL and the brake lamps BL turn on and off at a frequency at which human eyes cannot recognize visually. Therefore, even if it makes the light-emitting diodes repeat lighting and non lighting to acquire the image data G, misunderstandings of nearby pedestrians and drivers of other vehicles can be avoided.
(3) In the above embodiment, the control unit 2 uses the image data G, which is input from the rear camera 26 mounted at the rear end of the vehicle C, for image composition processing. For this reason, the composite image 30 of good image quality can be displayed during parking operation.
(4) In the above embodiment, the lamp control part 25 outputs the image pickup timing signal that does not depend on the phase of the on/off signal when the tail lamps TL and the brake lamps BL are not lighting. For this reason, acquisition processing of the image data G can be performed depending on the state of the tail lamps TL and the brake lamps BL.

Further, the above embodiment may be changed as follows.

In the above embodiment, the lamp control part 25 generates the on/off signal and controls to drive the tail lamps TL and the brake lamps BL; however, it is also possible that the control unit 2 (for example, the control part 3 or the image processor 15) generates the on/off signal and controls to drive the tail lamps TL and the brake lamps BL. In this case, the control unit 2 (for example, the control part 3 or the image processor 15) outputs the image pickup timing signal.

In the above embodiment, the camera driver 14 performs image taking based on the image pickup timing signal that does not depend on the phase of the on/off signal when the tail lamps TL and the brake lamps BL are not lighting. Instead, the image taking may be performed by driving the rear camera 26 every time the vehicle C moves backward by a predetermined distance, according to the main control of the control part 3.

The image processor 15, after applying a coordinate conversion to the image data G to generate the panoramic view data G1, stores it in the image memory 17; however, the image data G may be stored in the image memory 17 without coordinate conversion, and the coordinate conversion may be applied at the time of composition.

In the above embodiment, the composition is performed by continuously arranging each the panoramic view data G1 and the current image data G2; however, the composition may be performed by other method.

In the above embodiment, the image taking is synchronized with the tail lamps TL and the brake lamps BL; however, it may be synchronized with the turn lamp SL. In this case, the turn lamp SL is flashed by the lamp control part 25 with periods in which human eyes can recognize visually, and the camera driver 14 performs image taking when the light-emitting diodes of the turn lamp SL are non-luminous in the flashing periods. In this way also, the composite image 30 of good image quality can be displayed.

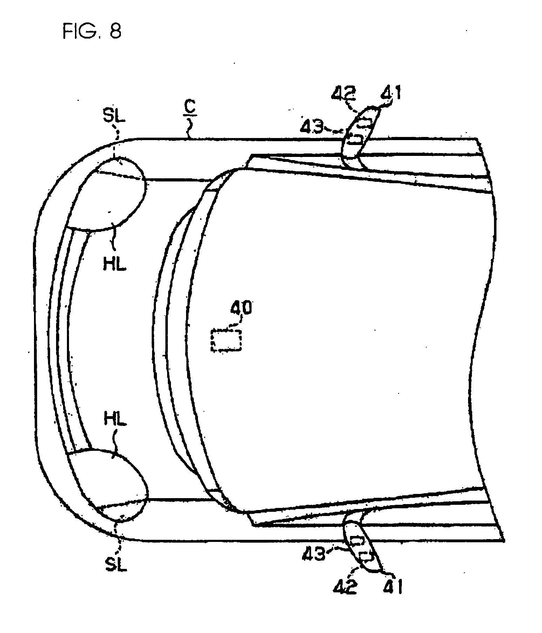

The camera may be timed with other lamps that have light-emitting diodes than the lamps described in the above embodiment. For example, in case, as shown in FIG 8, that the image processor 15 as a vehicle recognition device performs image recognition using a forward-monitoring camera 40 as an image-taking device mounted at the front part of the vehicle C, image taking may be performed by driving the forward-monitoring camera 40 when the light-emitting diodes of headlamps HL and front turn lamps SL are non-luminous. In addition, when image composition or image recognition is performed using a blind corner camera 42 installed in a side mirror 41 of the vehicle C, if a turn lamp or a lamp 43 such as a supplemental light for photographing is installed in a side mirror 41, the blind corner camera 42 may be exposed to light when the light-emitting diode of the lamp 43 is non-luminous.

The control part 3 may control so that right and left lamps such as the tail lamps TL provide different amounts of light at the same time by, for example, flashing alternately the right and left tail lamps TL of the vehicle C. For example, when the left tail lamp TL is lighting, a picture is taken by the rear camera 26, whereby the first image data G is generated. When the right tail lamp TL is lighting, a picture is taken by the rear camera 26, whereby the second image data G is generated. Then, applying a known edge extraction to the first image data G and the second image data G, an image recognition to detect objects around the vehicle may be performed. In this case, because the first image data G and the second image data G are taken under illumination conditions different from each other, the detected edges are also different from each other. By integrating these detected edges, the shape of the object is distinguished in detail. Therefore, in this manner, by photographing the area around the vehicle under different illumination conditions and generating multiple image data, and then by integrating the image processing result of each image data, shapes of objects around the vehicle or of the road can be recognized more exactly and more in detail.

## Claims

1. A driving assist method using an image-taking device (26) mounted on a vehicle and displaying a driving assist image on a displaying device (8), the method comprising:
keeping an illuminator included in a vehicle lighting device (TL, SL BL) in a lighting state repeating luminous and non-luminous periods at a predetermined frequency;
taking an image of at least a part of an environment of the vehicle with the image-taking device in a non-luminous period of the illuminator;
**characterized by**
storing (S1-4) image data based on the taken image together with associated position data in an image data storage (17);
judging (S2-2), based on the current position of the vehicle and the position data stored in the image data storage (17), whether or not a composite image can be formed;
when judging that a composite image can be formed:
forming composite data by composing a plurality of image data generated by image taking; and
displaying a driving assist image based on the composite data on the displaying device;
when judging that a composite image can not be formed:
performing image taking independently of the repeating luminous and non-luminous periods of the illuminator, and displaying a driving assist image based on the independent image taking.

2. A driving assist apparatus (1) adapted for acquiring a plurality of image data from an image-taking device mounted on a vehicle, storing each the image data in an image data storage (17) together with associated position data, composing the plurality of image data to form a driving assist image, and outputting the driving assist image to a displaying device, the apparatus comprising:
an image-taking controller (3) adapted for controlling the image-taking device in a non-luminous period of an illuminator included in a vehicle lighting device as the illuminator is in a lighting state repeating luminous and non-luminous periods at a predetermined frequency so as to take an image of at least a part of an environment of the vehicle, and acquiring the image data from the image-taking device; and
**characterized by**
an output controller (15) adapted for judging (S2-2), based on the current position of the vehicle and the position data stored in the image data storage (17), whether or not a composite image can be formed, the output controller (15) further being adapted for, when judging that a composite image can be formed, forming composite data by using the plurality of image data stored in the image data storage (17), and displaying the driving assist image based on the composite data on the displaying device, and, when judging that a composite image can not be formed, performing image taking independently of the repeating luminous and non-luminous periods of the illuminator, and displaying a driving assist image based on the independent image taking.

3. The driving assist apparatus according to claim 2, wherein the image-taking controller is adapted to, as the illuminator included in the vehicle lighting device is non-luminous in a non-lighting state, control the image-taking device to take an image at a constant interval or at every predetermined travel distance of the vehicle.

4. The driving assist apparatus according to claim 2 or 3, wherein the image-taking controller is adapted to, as the illuminator included in at least one of tail, brake, and direction indicator lamps of the vehicle is non-luminous, control the image-taking device mounted to a rear end of the vehicle to take an image.

## Patentansprüche

1. Fahrhilfeverfahren, das eine an einem Fahrzeug befestigte Bildaufnahmevorrichtung (26) benutzt und ein Fahrhilfebild auf einer Anzeigevorrichtung (8) anzeigt, mit
Halten eines in einer Fahrzeugbeleuchtungsvorrichtung (TL, SL BL) enthaltenen Beleuchters in einem Leuchtzustand, der mit einer vorbestimmten Frequenz leuchtende und nicht-leuchtende Perioden wiederholt,
Aufnehmen eines Bildes von zumindest einem Teil einer Umgebung des Fahrzeugs mit der Bildaufnahmevorrichtung in einer nicht-leuchtenden Periode des Beleuchters,
**gekennzeichnet durch**
Speichern (S 1-4) von Bilddaten, die auf dem aufgenommenen Bild basieren, zusammen mit zugehörigen Positionsdaten in einem Bilddatenspeicher (17),
Beurteilen (S2-2), basierend auf der aktuellen Position des Fahrzeugs und der in dem Bilddatenspeicher (17) gespeicherten Positionsdaten, ob ein zusammengesetztes Bild gebildet werden kann oder nicht,
wenn beurteilt wird, dass ein zusammengesetztes Bild gebildet werden kann,
Bilden von zusammengesetzten Daten **durch** Zusammensetzen einer Mehrzahl von Bilddaten, die **durch** Aufnehmen eines Bildes erzeugt wurden, und
Anzeigen eines Fahrhilfebildes, das auf den zusammengesetzten Daten basiert, auf der Anzeigevorrichtung,
wenn beurteilt wird, dass ein zusammengesetztes Bild nicht gebildet werden kann,
Durchführen von Aufnehmen eines Bildes unabhängig von den wiederholten leuchtenden und nicht-leuchtenden Perioden des Beleuchters und Anzeigen eines Fahrhilfebildes, das auf dem unabhängigen Aufnehmen eines Bildes basiert.

2. Fahrhilfevorrichtung (1), die angepasst ist zum Erfassen einer Mehrzahl von Bilddaten von einer auf einem Fahrzeug montierten Bildaufnahmevorrichtung, zum Speichern der jeweiligen Bilddaten in einem Bilddatenspeicher (17) zusammen mit zugehörigen Positionsdaten, zum Zusammensetzten der Mehrzahl von Bilddaten für ein Bilden eines Fahrhilfebildes und zum Ausgeben des Fahrhilfebildes an eine Anzeigevorrichtung, mit
einer Bildaufnahmesteuerung (3), die angepasst ist zum Steuern der Bildaufnahmevorrichtung in einer nicht-leuchtenden Periode eines in einer Fahrzeugbeleuchtungseinrichtung enthaltenen Beleuchters, wenn der Beleuchter in einem Leuchtzustand ist, der mit einer vorbestimmten Frequenz leuchtende und nicht-leuchtende Perioden wiederholt, um ein Bild von zumindest einem Teil einer Umgebung des Fahrzeugs aufzunehmen, und zum Erfassen der Bilddaten von der Bildaufnahmevorrichtung und
**gekennzeichnet durch**
eine Ausgabesteuerung (15), die angepasst ist zum Beurteilen (S2-2), basierend auf der aktuellen Position des Fahrzeugs und den in dem Bilddatenspeicher (17) gespeicherten Positionsdaten, ob ein zusammengesetztes Bild gebildet werden kann oder nicht, wobei die Ausgabesteuerung (15) ferner angepasst ist zum Bilden von zusammengesetzten Daten **durch** Benutzen der Mehrzahl von Bilddaten, die in dem Bilddatenspeicher (17) gespeichert sind, wenn beurteilt wird, dass ein zusammengesetztes Bild gebildet werden kann, und zum Anzeigen des Fahrhilfebildes, das auf den zusammengesetzten Daten basiert, auf der Anzeigevorrichtung, und, wenn beurteilt wird, dass ein zusammengesetztes Bild nicht gebildet werden kann, zum Durchführen einer Bildaufnahme, die unabhängig von den sich wiederholenden leuchtenden und nicht-leuchtenden Perioden des Beleuchters ist, und zum Anzeigen eines Fahrhilfebildes, das auf der unabhängigen Bildaufnahme basiert.

3. Fahrhilfevorrichtung nach Anspruch 2, bei der die Bildaufnahmesteuerung angepasst ist, die Bildaufnahmevorrichtung zur Aufnahme eines Bildes in einem konstanten Intervall oder nach jeder vorbestimmten gefahrenen Distanz des Fahrzeugs steuert, wenn der in der Fahrzeugbeleuchtungseinrichtung enthaltene Beleuchter nicht-leuchtend in einem Nichtleuchtzustand ist.

4. Fahrhilfevorrichtung nach Anspruch 2 oder 3, bei der die Bildaufnahmesteuerung zum Steuern der an einem rückseitigen Ende des Fahrzeugs montierten Bildaufnahmevorrichtung zum Aufnehmen eines Bildes angepasst ist, wenn der Beleuchter, der mindestens in einem von einem Schluss-, Brems- und Richtungsanzeigelicht des Fahrzeugs enthalten ist, nicht-leuchtend ist.

## Revendications

1. Procédé d'assistance à la conduite utilisant un dispositif de prise d'images (26) monté sur un véhicule et affichant une image d'assistance à la conduite sur un dispositif d'affichage (8), le procédé comprenant les étapes consistant à :
maintenir un illuminateur inclus dans un dispositif d'éclairage de véhicule (TL, SL, BL) dans un état d'éclairage répétant des périodes lumineuses et non lumineuses à une fréquence prédéterminée ;
prendre une image d'au moins une partie d'un environnement du véhicule avec le dispositif de prise d'images dans une période non lumineuse de l'illuminateur ;
**caractérisé par** les étapes consistant à :
mémoriser (S1-4) des données d'image sur la base de l'image prise conjointement à des données de position associées dans une mémoire de données d'image (17) ;
déterminer (S2-2), sur la base de la position actuelle du véhicule et des données de position stockées dans la mémoire de données d'image (17), si une image composite peut être formée ou non ;
lorsqu'il est déterminé qu'une image composite peut être formée :
former des données composites en composant une pluralité de données d'image générées par prise d'images ; et
afficher une image d'assistance à la conduite sur la base des données composites sur le dispositif d'affichage ;
lorsqu'il est déterminé qu'une image composite ne peut pas être formée :
réaliser une prise d'images indépendamment de la répétition des périodes lumineuses et non lumineuses de l'illuminateur, et afficher une image d'assistance à la conduite sur la base de la prise d'images indépendante.

2. Appareil d'assistance à la conduite (1) adapté pour acquérir une pluralité de données d'image à partir d'un dispositif de prise d'images monté sur un véhicule, mémoriser toutes les données d'image dans une mémoire de données d'image (17) conjointement à des données de position associées, composer la pluralité de données d'image pour former une image d'assistance à la conduite, et envoyer l'image d'assistance à la conduite à un dispositif d'affichage, l'appareil comprenant :
un dispositif de commande de prise d'images (3) adapté pour commander le dispositif de prise d'images dans une période non lumineuse d'un illuminateur inclus dans un dispositif d'éclairage de véhicule lorsque l'illuminateur est dans un état d'éclairage répétant des périodes lumineuses et non lumineuses à une fréquence prédéterminée afin de prendre une image d'au moins une partie d'un environnement du véhicule, et acquérir les données d'image à partir du dispositif de prise d'images ; et
**caractérisé par**
un dispositif de commande de sortie (15) adapté pour déterminer (S2-2), sur la base de la position actuelle du véhicule et des données de position stockées dans la mémoire de données d'image (17), si une image composite peut être formée ou non, le dispositif de commande de sortie (15) étant en outre adapté pour, lorsqu'il est déterminé qu'une image composite peut être formée, former des données composites en utilisant la pluralité de données d'image stockées dans la mémoire de données d'image (17), et afficher l'image d'assistance à la conduite sur la base des données composites sur le dispositif d'affichage, et, lorsqu'il est déterminé qu'une image composite ne peut pas être formée, réaliser une prise d'images indépendamment de la répétition des périodes lumineuses et non lumineuses de l'illuminateur, et afficher une image d'assistance à la conduite sur la base de la prise d'images indépendante.

3. Appareil d'assistance à la conduite selon la revendication 2, dans lequel le dispositif de commande de prise d'images est adapté pour, lorsque l'illuminateur inclus dans le dispositif d'éclairage de véhicule n'est pas lumineux dans un état de non-éclairage, commander le dispositif de prise d'images pour prendre une image à un intervalle constant ou à chaque distance de déplacement prédéterminée du véhicule.

4. Appareil d'assistance à la conduite selon la revendication 2 ou 3, dans lequel le dispositif de commande de prise d'images est adapté pour, lorsque l'illuminateur inclus dans au moins un parmi des feux arrière, de freinage, et clignotants du véhicule n'est pas lumineux, commander le dispositif de prise d'images monté sur une extrémité arrière du véhicule pour prendre une image.
